# EUROPEAN PATENT SPECIFICATION

(11) **EP 2 321 765 B1**
(45) Date of publication and mention of the grant of the patent: **16.10.2013**
(21) Application number: 09801075.4
(22) Date of filing: 24.07.2009
(51) Int. Cl.: G06K 9/00, G06K 9/22, G07C 9/00

(54) **MOBILE BIOMETRIC IDENTIFICATION SYSTEM AND METHOD**
MOBILES BIOMETRISCHES IDENTIFIKATIONSSYSTEM UND -VERFAHREN
SYSTÈME ET PROCÉDÉ D'IDENTIFICATION BIOMÉTRIQUE MOBILE

(30) Priority: 24.07.2008 US 83512 P
(43) Date of publication of application: 18.05.2011
(73) Proprietor: Kynen Llc, Severna Park, MD 21146 (US)
(72) Inventor: BELL, Robert, E., Severna Park MD 21146 (US); WINSOR, Robert, S., Round Hill VA 20141 (US); DYNES, Richard, M., Fredericksburg VA 22404 (US); KREBS, Aaron, H., Carlisle PA 17015 (US); METZGER, Aaron, R., Reston VA 20190 (US)
(74) Representative: Sonnenberg, Fred
(86) International application number: PCT/US2009/051702
(87) International publication number: WO 2010/011932

(56) References cited:
- US-A1- 2003 152 252
- US-A1- 2003 204 290
- US-A1- 2004 179 718
- US-A1- 2005 238 210
- US-A1- 2006 120 707
- US-A1- 2006 236 119
- US-A1- 2007 098 391
- US-A1- 2007 211 921
- US-B1- 6 289 113
- US-B1- 6 333 988

## Description

### BACKGROUND OF THE INVENTION

### Field Of The Invention

The present invention relates generally to biometric identification systems and methods and, more specifically, to iris identification systems and methods.

### Brief Description Of The Related Art

Methods and devices for identifying individuals have become increasingly important. Many such devices and methods, such as fingerprint, facial image, iris, and other biometric identification devices have been developed. For example, a multipurpose flashlight is known from the Patent Application Publication US 2007/0098391 A1, wherein a method and apparatus for hand-held portable illumination, sensing and evidence collection is described. While these prior systems may have been useful in certain environments, a need exists for faster, more accurate, and more reliable identification systems and methods.

### SUMMARY OF THE INVENTION

The present invention comprises a mobile biometric identification system according to claim 1 and a method for performing biometric identification according to claim 15.

The present invention is a mobile identification system and method. In a preferred embodiment, the present invention is a biometric identification system in a small, robust mobile housing, for example, in the shape of a flashlight. The system in the preferred embodiment provides rapid determination of identify, or in the alternative, rapid determination of whether an individual's identification information is in a particular database. In the preferred embodiment, iris recognition is the primary means of identification. The system and method may be used in the field and minimizes acquisition time and target adjudication while maintaining a distance from the subject. In the preferred embodiment, the system and method return one of a small number of easily recognizable results, such as "Not Known", "Known Friendly," and "Known Unfriendly" in a military application of the invention, by illuminating various LEDs. For example, a yellow LED may be illuminated to indicate that the individual in question is not known to the system, a green LED may be illuminated to indicate that the individual in question has been recognized by the system and being a known friendly, and a red LED may be illuminated to indicate that the individual has be recognized by the system as a known unfriendly. The configuration and meaning of the LEDs may be customized to a particular application. For example, in a police application rather than military, LEDs could for example mean "outstanding warrant," "criminal record" or "no criminal record." Further, while the LEDs in the preferred embodiment provide information in a very simple form, other types of displays may be used with the present invention to provide a user with whatever information is relevant in that particular application.

In the preferred embodiment, the invention is in the form of a flashlight that provides white light illumination in addition to iris or other biometric identification. Further, the device may capture and store facial images or other images. The preferred embodiment further includes a connection for charging a battery in the device, for downloading acquired images or data, and or uploading data or images from a broader system. The data connection may be of any type (wired or wireless), including but not limited to wireless techniques such as Bluetooth, WiFi, cellular, etc. Still further, the device may include, for example, a GPS or other location identification system for determining a location at which an identification is made. The device additionally may include storage for storing images of any type, location data, time data, or any other acquired data relevant to a particular application.

In a preferred embodiment, the present invention is a mobile biometric identification system. The system comprises a mobile housing, a processor mounted in said housing, a storage means mounted in said housing and connected to said processor, an illuminator mounted in said housing, a first switch connected to said illuminator and mounted to said housing for activating said illuminator, a biometric identification system mounted in said housing and connected to said processor, a second switch connected to said biometric identification system and mounted to said housing for activating said biometric identification system, a battery mounted in said housing; and a display on said housing. The biometric identification system may comprise an iris recognition system comprising a second illuminator, a lens system and an imager. The second illuminator may comprise an infrared LED.

In another embodiment, the mobile biometric identification system may further comprise a second biometric identification system such as a facial image recognition or fingerprint recognition system. The display may comprise a plurality of LEDs of differing colors. The system may further comprise a data communication means for transferring data to or from said biometric identification system. The data communication means may comprise a wireless data transfer system. The wireless data transmission system may, for example, have an internal antenna for transmitting and receiving data. The system may further comprise a location identification system such as a global positioning or GPS system.

The mobile or portable housing may take on a number of different forms, but in a preferred embodiment is in the form of a flashlight.

In another preferred embodiment, the present invention is a mobile biometric identification system where the system comprises a mobile housing, a processor mounted in said housing, a storage means mounted in said housing and connected to said processor, an illuminator mounted in said housing, a first switch connected to said illuminator and mounted to said housing for activating said illuminator, a biometric identification system mounted in said housing and connected to said processor, a second switch connected to said biometric identification system and mounted to said housing for activating said biometric identification system, a battery mounted in said housing and means for communicating information to a user. The means for communicating information to a user may comprise a transmitter for transmitting audio signals, a receiver for receiving said audio signals and a speaker. The speaker may be located in the mobile housing or may be in an earpiece. Further, the system may broadcast an audio signal to other audio devices such a radios. The means for communicating information to a user further may comprise one or a plurality of LEDs or another visual display.

In yet another embodiment, the present invention is a method for performing biometric identification of a subject. The method comprises the steps of illuminating a subject with an illuminator mounted in a mobile device, capturing an image associated with said subject on said mobile device, performing a quality test on said captured image, providing a first indicator to a user if said image fails said quality test, generating an image template if said image asses said quality test, comparing said image template to a database of image templates and providing data to said user if for said captured image template a match is found in said database.

Still other aspects, features, and advantages of the present invention are readily apparent from the following detailed description, simply by illustrating a preferable embodiments and implementations. The present invention is also capable of other and different embodiments and its several details can be modified in various obvious respects. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### BRIEF DESCRIPTION OF THE DRAWINGS

For a more complete understanding of the present invention and the advantages thereof, reference is now made to the following description and the accompanying drawings, in which:

FIG. 1 is a perspective view of a preferred embodiment in accordance with the present invention.

FIG. 2 is a block diagram of a preferred embodiment in accordance with the present invention.

FIG. 3 is a flow chart of a method of a preferred embodiment of the present invention.

FIG. 4 is an illustration of data acquired in a preferred embodiment of the present invention.

### DETAILED DESCRIPTION OF THE PREFERRED EMBODIMENTS

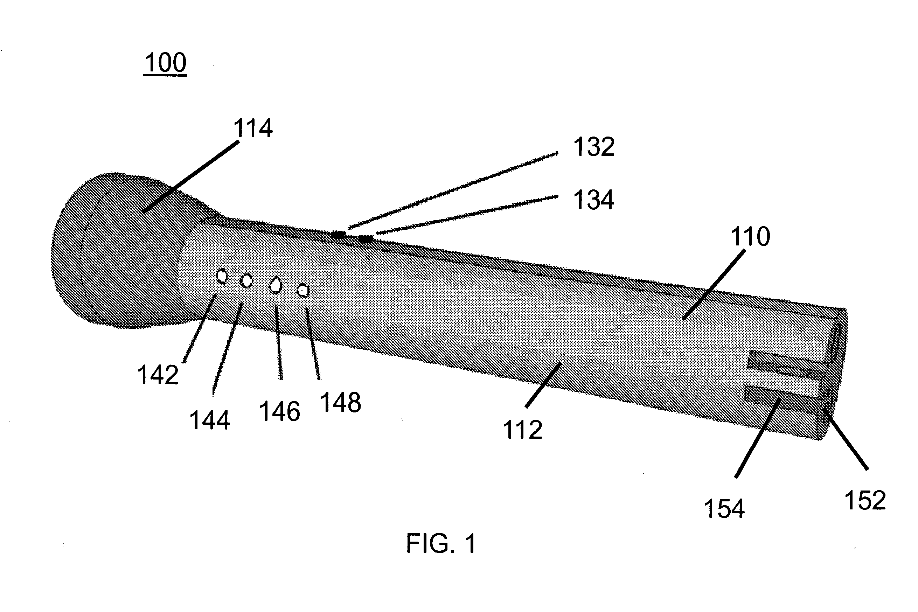

The present invention may be used in many different environments including, but not limited to, military, law enforcement, special operations, search and rescue, and private security. A preferred embodiment of the present invention for military applications is described with reference to FIGs. 1-4. This preferred embodiment is a tactical biometric identification device (primarily iris recognition) designed for rapid determination of Friend or Foe status of a potentially dangerous subject in a hostile environment. The invention, of course, may be used in many other environments and may include many variations.

In the preferred embodiment shown in FIG. 1, the mobile device 100 has a portable or mobile housing 110, in this embodiment in the form of a standard flashlight having an elongated portion 112 and a head 114. The flashlight form of this embodiment is advantageous because it has dual functionality as a flashlight and a mobile biometric identification device and therefore can replace equipment currently being carried by individuals rather than requiring them to carry additional equipment. Arrangements of the various components may be used to provide for one-handed use. The head or distal end 114 has an illumination means such as a light bulb, LED or laser (not shown). On the housing 110 is a switch 132 for turning the illumination means on and/or off and a switch 134 for turning the biometric identification system, such as an iris recognition system, on and/or off. A display is mounted on the housing. The display may include, for example, a plurality of LEDs 142, 144, 146 and 148 of various colors. In FIG. 1, four LEDs are shown: a red LED 142 to indicate that an individual in question has been identified as "known unfriendly," a green LED 144 for indicating that an individual in question has been identified as a "known unfriendly," a yellow LED 146 for indicating that an individual in question has been identified as "unknown," and a white LED 148 for indicating that the recognition system has failed in some manner such as a failure to capture the iris of the individual in question.

The LEDs may be mounted in such a way as to be apparent only to the user. For example, the LED's may be mounted in an angular manner such that they are facing toward the operator of the device and are shielded from the view of the subject whose identity is being checked. In other embodiments, the LED's could be placed on a proximal end of the device rather than the side or the LED's could be shielded from view by a flange or hood-like structure.

Other arrangements of LEDs or displays to provide a user with different information or information in different forms will be readily apparent to those of skill in the art and may be used with the present invention. In lieu of LEDs, a small display, such as the type used on a cellular phone or other mobile device, may be integrated into the invention to provide an image feedback of the target and/or a stored image corresponding to the identity of the subject. In such an alternate embodiment, the display could be used to display any relevant information, such as data related to the subject being scanned, known associates, location data or any other information relevant to the particular circumstance.

This preferred embodiment of the invention further has rechargeable batteries (not shown) in the housing 110 and contacts 152, 154 or other means for charging the batteries and uploading or downloading data to or from the device.

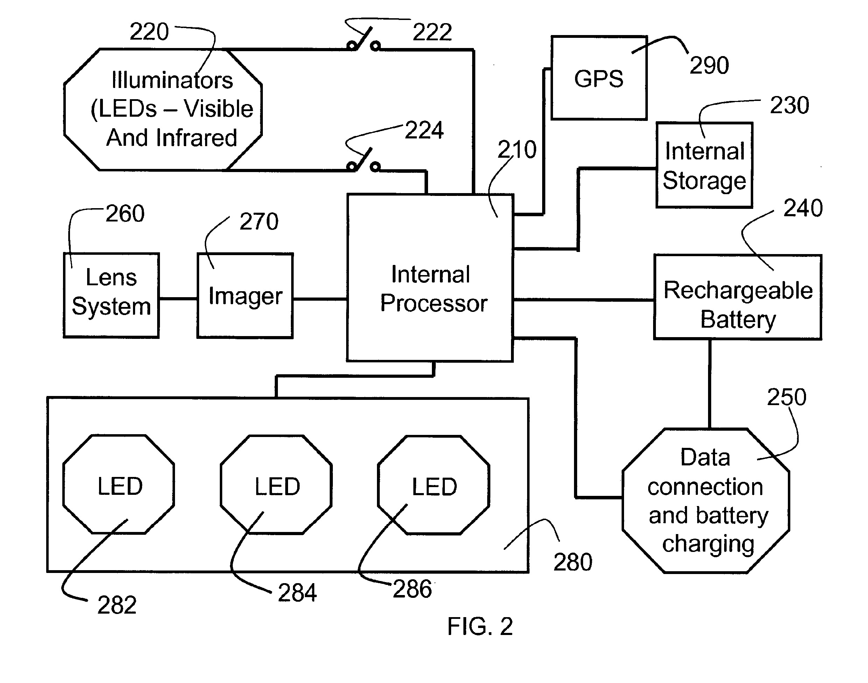

The system components of the preferred embodiment of the present invention are described with reference to the block diagram shown in FIG. 2. The system has an internal processor 210 located in the housing 110. Illuminators 220, which may be of any known type and may be visible or, for example, infrared, are located in the head 114 of the housing 110. The illuminators are turned on and off by the switches 222, 224, which, for example, may be a standard flashlight switch 222 or an iris recognition switch 224. An internal storage, for example a non-volatile memory, disk or card 230, is connected to the internal processor 210. The internal storage 230 preferably has capacity to store collected and uploaded data such as iris templates or facial images in large quantities of ten thousand or more. The system further has a battery 240, which in the preferred embodiment is rechargeable. Still further, the system has a data connection and battery charging port 250 to provide rapid re-charging of the batteries and uploading or downloading of data. The data connection may be wired or wireless. For embodiments having a wireless data connection, such as RFID, Bluetooth, WiFi, cellular or otherwise, the system may have an internal or external antenna. In other embodiments, rather than having an input/output port, the system may include a port for inserting or removing storage devices or media containing data either to be accessed directly from such storage devices or for data to be copied to or from such storage data manually or automatically. The iris detection system in the preferred embodiment has a lens system 260, and imager 270 and associated software stored in processor memory, in the internal storage 230 or in other storage means provide in the housing. The system preferably provides for rapid iris matching and storage from a distance of one meter or more. In other embodiments that perhaps are less hostile than that for military applications, the system may provide only for iris recognition at shorter distances such as 10-12 inches. The rapidity of the biometric identification and the distance at which it may be used are both parameters that may be chosen based upon the particular application for which a specific embodiment of the invention is being used. For example, if fingerprint recognition is used instead of iris recognition, the distance at which the embodiment could be used would effectively be zero. Similarly, if the database of known information is very large or very small, the rapidity of identification could be faster or slower.

The system of the preferred embodiment has a display 280, which in the preferred embodiment comprises a plurality of LEDs 282, 284, 286 of differing colors such as red, green, yellow and/or white. While three LEDs are shown in FIG. 2 and four are shown in FIG.1, any number of LEDs may be used depending on the particular application. The system further may have, for example, a geographic location system, such as a GPS 290 or other system, for providing location, date and time information that may be associated with a captured image and/or stored for later use or downloading. Still further, wireless operations, including but not limited to an RFID, may be combined with or used with the invention. The system may further provide use in hostile environments by having shock absorption or other features to provide durability and robustness.

In another embodiment, an audible device such as an internal or external speaker may be incorporated into the system in addition to or in lieu of the visual display. For example, the mobile device may include a wireless transmitter to transmit audio information to a wireless earpiece, such as through a Bluetooth or other connection. In this manner, information such as a friend/foe/unknown indicator or data regarding a subject to be broadcast to the user of the device in a manner in which the user would not need to take his eyes away from the subject. Similarly, the mobile identification device does not necessarily need to have a separate independent audio system, but instead may transmit to or over existing systems such as mobile radios or transmit to radios or earpieces associated with other mobile devices. For example, in a military environment in which multiple teams are searching houses, information regarding a subject identified by a first mobile device in accordance with the present invention may be broadcast to earpieces associated with other mobile devices in accordance with the invention in the vicinity of the first mobile device. Similarly, in embodiments with visual displays, data regarding an identified subject and related data may be transmitted to other mobile devices in the vicinity. With such an embodiment, if a hostile subject is identified by one mobile device, data regarding known associates, etc. may be transmitted to other mobile devices in the vicinity for visual display on another mobile device or may broadcast to other personnel in the vicinity, either through a mobile device in accordance with the present invention or via radio or other means.

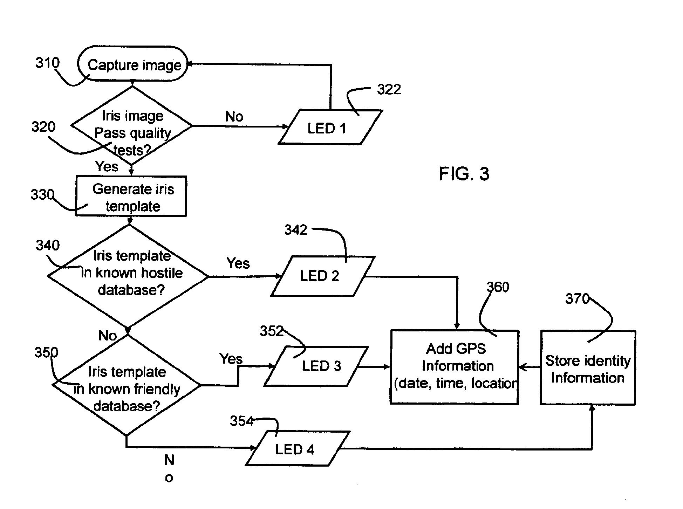

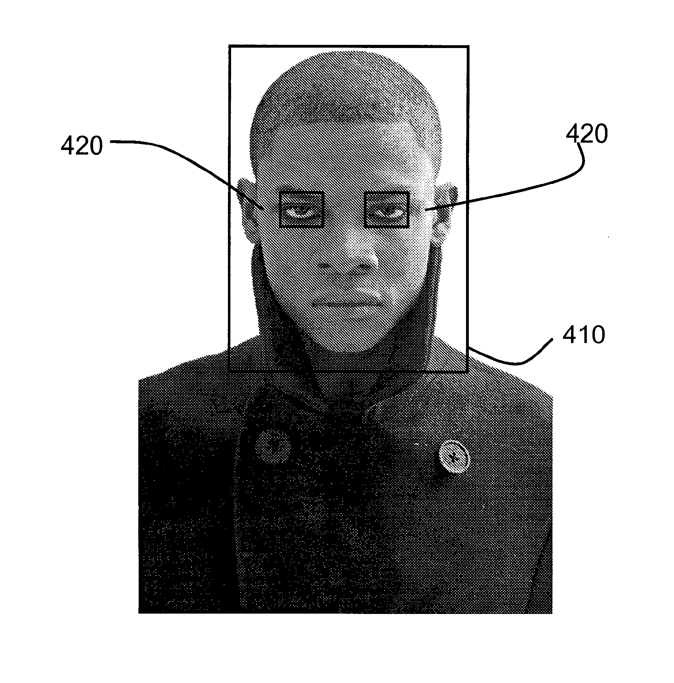

A preferred embodiment of a method for use with the present invention is described with reference to the flow chart shown in FIG. 3. Beginning at step 310, an iris image is captured. At step 320, a determination is made as to whether the captured image passes quality tests and is good enough for processing. If not, the system proceeds to step 322 at which a white LED on the housing is illuminated to indicate to the user that iris recognition has failed and a new image should be captured. If it is determined at step 320 that the captured image is good enough for processing, the system proceeds to step 330 at which it generates an iris template from the captured image. The generated iris template is then compared to a database of stored iris templates at step 340. If the generated iris template matches that of a known hostile or unfriendly, the system proceeds to illuminate a red LED to indicate "known unfriendly" to the user at step 342 and then store information such as date, time and location to associate with that iris template at step 360. If the generated iris template does not match an iris template of a known unfriendly at step 340, the system determines whether the generated iris template matches a stored iris template of a known friendly at step 350. If a match is found, the system illuminates a green LED at step 352 to indicate to the user that the individual is a known friendly and then may proceed to step 360 to add date, time and location information to the database. If at step 350 the generated iris template is not found to match a stored iris template of a known friendly, the system proceeds to illuminate a yellow LED at step 354 to indicate that the individual is not known. The system then stores the generated iris template at step 370 and at step 360 adds date, time and location information to associate with the generated (and now stored) iris template. As shown in FIG. 4, the system may capture, compare and store iris information 420 and facial image data 410.

While in the above-described preferred embodiment of the mobile biometric identification devices download and/or uploads data and images (i.e., the system can be bi-directional or uni-directional) during a charging or re-charging cycle, it will be understood by those of skill in the art that other embodiments are both possible and desirable for various applications of the invention. For example, images and data could be uploaded from the mobile system to a central control authority or system or sent to one or more other mobile devices in near real-time in regions where sufficient wireless systems exist. Similarly, images or data could be downloaded from the central authority to a mobile system or from one mobile system to another in near real-time, at predetermined intervals, or when certain conditions are met. For example, certain circumstances such as identification of a known hostile could trigger the mobile system to send or upload data either to the central authority or to other mobile devices. In this manner, data and images can be shared within a broader system of multiple mobile devices and shared between multiple mobile devices and a central authority or system. One of skill in the art will understand that the mobile devices of the present invention may be networked with one another and/or with a central location. Additionally, security features such as encryption may be used with such a system to achieve security.

In one embodiment for use in law enforcement, for example, a mobile device in accordance with the present invention may be networked or otherwise wirelessly connected to electronics such as a computer in a police car. The mobile device and police car electronics in such an embodiment may transmit information such as images, identity data, police records, etc. back and forth to one another. Devices in accordance with the present invention similarly could include license plate recognition capabilities to identify vehicles as well as individuals and display data as a result of such license plate recognition.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto.

## Claims

1. A mobile biometric identification system (100) comprising:
a mobile housing (110);
a processor (210) mounted in said housing;
a storage means (230) mounted in said housing (110) and connected to said processor (210);
a first illuminator (220) mounted in said housing (110);
a first switch (132, 222) connected to said first illuminator (220) and mounted to said housing (110) for activating said first illuminator (220);
an iris recognition system mounted in said housing (110) and connected to said processor (210), said iris recognition system comprising a second illuminator (220), a lens system (260) and an imager (270);
a second switch (134, 224) connected to said biometric identification system and mounted to said housing (110), wherein said second switch (224) activates said second illuminator to illuminate a face of a subject, activates said imager (270) to capture an image of said face and activates said processor (210) to perform iris recognition on an iris of said subject;
a battery (240) mounted in said housing (110);
a display (280) **characterised in that** said display (280) is connected to said iris recognition system and mounted on said housing (110), wherein said display (280) includes means for communicating information to a user, wherein said means for communicating information comprises at least one LED (142, 144, 146, 148; 282, 284, 286) that illuminates in response to said image of said subject by said biometric identification system passing a quality test.

2. A mobile biometric identification system (100) according to claim 1, wherein said second illuminator (220) comprises an infrared LED.

3. A mobile biometric identification system (100) according to claim 1, further comprising a second biometric identification system.

4. A mobile biometric identification system (100) according to claim 3, wherein said second biometric identification system comprises a facial image recognition system.

5. A mobile biometric identification system (100) according to claim 1, wherein said display (280) comprises a plurality of LEDs (142, 144, 146, 148; 282, 284, 286) of differing colors, wherein a first LED illuminates when an image captured by said imager (270) has not passed a quality test, a second LED illuminates when a first result of an iris recognition performed by said processor (210) occurs, a third LED illuminates when a second result of an iris recognition performed by said processor occurs and a fourth LED illuminates when a third result of an iris recognition performed by said processor (210) occurs.

6. A mobile biometric identification system (100) according to claim 1, further comprising a data communication means for transferring data to or from said biometric identification system.

7. A mobile biometric identification system (100) according to claim 6, wherein said data communication means comprises a wireless data transfer system.

8. A mobile biometric identification system (100) according to claim 7, further comprising an internal antenna for said wireless data transfer system.

9. A mobile biometric identification system (100) according to claim 1, further comprising location identification system.

10. A mobile biometric identification system (100) according to claim 9, wherein said location identification system comprises a GPS system (290).

11. A mobile biometric identification system (100) according to claim 1, wherein said mobile housing (110) comprises a housing (112, 114) in a form of a flashlight.

12. A mobile biometric identification system (100) according to claim 1, wherein said means for communicating information to a user comprises:
a transmitter for transmitting audio signals;
a receiver for receiving said audio signals; and
a speaker.

13. A mobile biometric identification system (100) according to claim 12, wherein said speaker comprises an earpiece.

14. A mobile biometric identification system (100) according to claim 1, wherein said means for communicating information to a user further comprises at least one LED that illuminates in response to said biometric identification system matching an image of said subject to an image in a database.

15. A method for performing biometric identification of subject comprising the steps of:
illuminating a subject with a mobile device;
capturing an image associated with said subject on said mobile device;
performing a quality test on said captured image;
providing a first indicator to a user if said image fails said quality test;
generating an image template if said image passes said quality test;
comparing said image template to a database of image templates; and
providing data to said user if for said captured image template a match is found in said database.

## Patentansprüche

1. Mobiles biometrisches Identifikationssystem (100) umfassend:
ein mobiles Gehäuse (110);
ein Prozessor (210), welcher in dem Gehäuse montiert ist;
ein Speichermittel (230), dass in dem Gehäuse (110) montiert ist und mit dem Prozessor (210) verbunden ist;
einen ersten Illuminator (220), welcher in dem Gehäuse (110) montiert ist;
einen ersten Schalter (132, 222), welcher mit dem ersten Illuminator (220) verbunden ist und an das Gehäuse (110) zum Aktivieren des ersten Illuminators (220) montiert ist;
ein Iriserkennungssystem, welches in dem Gehäuse (110) montiert ist und mit dem Prozessor (210) verbunden ist, wobei das Iriserkennungssystem einen zweiten Illuminator (220), ein Linsensystem (260) und ein Imager (270) umfasst;
einen zweiten Schalter (134, 224), welcher mit dem biometrischen Identifikationssystem verbunden ist und an dem Gehäuse (110) montiert ist, wobei der zweite Schalter (224) den zweiten Illuminator aktiviert, um ein Gesicht eines Subjekts zu beleuchten, den Imager (270) aktiviert, um ein Bild des Gesichts aufzunehmen und den Prozessor (210) aktiviert, um eine Iriserkennung an einer Iris des Subjekts durchzuführen;
eine Stromversorgung (240), welche in dem Gehäuse (110) montiert ist;
ein Display (280), **dadurch gekennzeichnet, dass** das Display (280) mit dem Iriserkennungssystem verbunden ist und an das Gehäuse (110) montiert ist, wobei das Display (280) Mittel umfasst zur Informationsübermittlung an einen Nutzer, wobei das Mittel zur Informationsübermittlung zumindest eine Leuchtiode (LED) (142, 144, 146, 148; 282, 284, 286) umfasst, das in Antwort auf das Bild des Subjekts erleuchtet, nachdem das biometrische Identifikationssystem einen Qualitätstest passiert.

2. Mobiles biometrisches Identifikationssystem (100) nach Anspruch 1, bei welchem der zweite Illuminator (220) eine Infrarotleuchtdiode (LED) umfasst.

3. Mobiles biometrisches Identifikationssystem (100) nach Anspruch 1, weiter umfassend ein zweites biometrisches Identifikationssystem.

4. Mobiles biometrisches Identifikationssystem (100) nach Anspruch 3, bei welchem das zweite biometrische Identifikationssystem ein Gesichtsbilderkennungssystem umfasst.

5. Mobiles biometrisches Identifikationssystem (100) nach Anspruch 1, bei welchem das Display (280) eine Vielzahl von Leuchtdioden (LEDs) (142, 144, 146, 148; 282, 284, 286) mit unterschiedlichen Farben umfasst, wobei eine erste LED erleuchtet wenn ein Bild, aufgenommen durch den Imager (270), ein Qualitätstest nicht passiert, ein zweites LED erleuchtet, wenn ein erstes Resultat einer Iriserkennung, durchgeführt durch den Prozessor (210), erfolgt, ein drittes LED erleuchtet, wenn ein zweites Resultat einer Iriserkennung, durchgeführt durch den Prozessor, erfolgt und ein viertes LED erleuchtet, wenn ein drittes Resultat einer Iriserkennung, durchgeführt durch den Prozessor (210), erfolgt.

6. Mobiles biometrisches Identifikationssystem (100) nach Anspruch 1, weiter umfassend ein Datenübermittlungsmittel zur Datentransferierung zu oder von dem biometrischen Identifikationssystem.

7. Mobiles biometrisches Identifikationssystem (100) nach Anspruch 6, bei welchem das Datenübermittlungsmittel ein drahtloses Datentransfersystem umfasst.

8. Mobiles biometrisches Identifikationssystem (100) nach Anspruch 7, weiter umfassend eine interne Antenne für das drahtlose Datentransfersystem.

9. Mobiles biometrisches Identifikationssystem (100) nach Anspruch 1, weiter umfassend ein Positionsidentifikationssystem.

10. Mobiles biometrisches Identifikationssystem (100) nach Anspruch 9, bei welchem das Positionsidentifikationssystem ein GPS-System (290) umfasst.

11. Mobiles biometrisches Identifikationssystem (100) nach Anspruch 1, bei welchem das mobile Gehäuse (110) ein Gehäuse (112, 114) in Gestalt einer Taschenlampe umfasst.

12. Mobiles biometrisches Identifikationssystem (100) nach Anspruch 1, bei welchem das Mittel zur Informationsübermittlung an einen Nutzer umfasst:
einen Sender zum Senden von Audiosignalen;
einen Empfänger zur Aufnahme von den Audiosignalen; und
ein Lautsprecher.

13. Mobiles biometrisches Identifikationssystem (100) nach Anspruch 12, bei welchem der Lautsprecher ein Ohrstöpsel umfasst.

14. Mobiles biometrisches Identifikationssystem (100) nach Anspruch 1, bei welchem das Mittel zur Informationsübermittlung an einen Nutzer weiter zumindest eine Leuchtdiode (LED) umfasst, das in Antwort auf das biometrische Identifikationssystem, welches ein Bild des Subjekts mit einem Bild in einer Datenbank abgleicht, erleuchtet.

15. Verfahren zur Durchführung einer biometrischen Identifikation eines Subjekts, die Schritte umfassend:
Beleuchten eines Subjekts mit einer mobilen Vorrichtung;
Aufnehmen eines Bildes, zugehörig zu dem Subjekt, auf der mobilen Vorrichtung;
Durchführen eines Qualitätstests anhand des aufgenommenen Bildes;
Bereitstellen einer ersten Anzeige für einen Nutzer, falls das Bild am Qualitätstest scheitert;
Vergleichen der Bildvorlage mit einer Datenbank von Bildvorlagen; und
Bereitstellen von Daten an einen Nutzer, falls für die aufgenommene Bildvorlage eine Übereinstimmung in der Datenbank gefunden wird.

## Revendications

1. Système d'identification biométrique mobile (100) comprenant :
un boîtier mobile (110),
un processeur (210) monté dans ledit boîtier,
des moyens de mémorisation (230) montés dans le boîtier (110) et reliés au processeur (210) ;
un premier élément d'illumination (220) monté dans le boîtier (110) ;
un premier commutateur (132, 222) relié au premier élément d'illumination (220) et monté sur le boîtier (110) pour activer le premier élément d'illumination (220) ;
un système de reconnaissance d'iris monté dans le boîtier (110) et relié au processeur (210), le système de reconnaissance d'iris comprenant un deuxième élément d'illumination (220), un système de lentille (260) et un système d'imagerie (270) ;
un deuxième commutateur (134, 224) relié au système d'identification biométrique et monté au boîtier (110), dans lequel le deuxième commutateur (224) active le deuxième élément d'illumination pour illuminer une face d'un sujet, active ledit système d'imagerie (270) pour capturer une image de ladite face, et active le processeur (210) pour réaliser une reconnaissance d'iris sur une iris du sujet ;
une batterie (240) montée dans le boîtier (110) ;
un affichage (280), **caractérisé en ce que** l'affichage (280) est relié au système de reconnaissance d'iris et est monté sur le boîtier (110), dans lequel l'affichage (280) comprend des moyens de communication d'information à un utilisateur, dans lequel les moyens de communication d'information comprennent au moins une LED (142, 144, 146, 148 ; 282, 284, 286) qui s'illumine en réponse à l'image dudit sujet par le système d'identification biométrique satisfaisant un test de qualité.

2. Système d'identification biométrique mobile (100) selon la revendication 1, dans lequel le deuxième élément d'illumination (220) comprend une LED infrarouge.

3. Système d'identification biométrique mobile (100) selon la revendication 1, comprenant en outre un deuxième système d'identification biométrique.

4. Système d'identification biométrique mobile (100) selon la revendication 3, dans lequel le deuxième système d'identification biométrique comprend un système de reconnaissance d'image faciale.

5. Système d'identification biométrique mobile (100) selon la revendication 1, dans lequel l'affichage (280) comprend une pluralité de LEDs (142, 144, 146, 148 ; 282, 284, 286) de couleurs différentes, dans lequel une première LED s'illumine lorsqu'une image capturée par ledit système d'imagerie (270) n'a pas réussi un test de qualité, une deuxième LED s'illumine lorsqu'un premier résultat d'une reconnaissance d'iris réalisée par le processeur (210) a lieu, une troisième LED s'illumine lorsqu'un deuxième résultat d'une reconnaissance d'iris réalisée par le processeur a lieu, et une quatrième LED s'illumine lorsqu'un troisième résultat d'une reconnaissance d'iris réalisée par le processeur (210) a lieu.

6. Système d'identification biométrique mobile (100) selon la revendication 1, comprenant en outre des moyens de communication de données pour transférer des données au ou depuis le système d'identification biométrique.

7. Système d'identification biométrique mobile (100) selon la revendication 6, dans lequel les moyens de communication de données comprennent un système de transfert de données sans fil.

8. Système d'identification biométrique mobile (100) selon la revendication 7, comprenant en outre une antenne interne pour le système de transfert de données sans fil.

9. Système d'identification biométrique mobile (100) selon la revendication 1, comprenant en outre un système d'identification d'emplacement.

10. Système d'identification biométrique mobile (100) selon la revendication 9, dans lequel le système d'identification d'emplacement comprend un système GPS (290).

11. Système d'identification biométrique mobile (100) selon la revendication 1, dans lequel le boîtier mobile (110) comprend un boîtier (112, 114) en forme de lampe de poche.

12. Système d'identification biométrique mobile (100) selon la revendication 1, dans lequel les moyens de communication d'information à un utilisateur comprennent :
un transmetteur pour transmettre des signaux audio ;
un récepteur pour recevoir les signaux audio ; et
un haut-parleur.

13. Système d'identification biométrique mobile (100) selon la revendication 12, dans lequel le haut-parleur comprend une oreillette.

14. Système d'identification biométrique mobile (100) selon la revendication 1, dans lequel les moyens de communication d'information à un utilisateur comprennent en outre au moins une LED qui s'illumine en réponse au système d'identification biométrique faisant la correspondance entre une image du sujet et une image dans une base de données.

15. Procédé de réalisation d'une identification biométrique d'un sujet comprenant les étapes consistant à :
illuminer un sujet avec un dispositif mobile ;
capturer une image associée audit sujet sur le dispositif mobile ;
réaliser un test de qualité sur l'image capturée ;
fournir un premier indicateur à un utilisateur si l'image a échoué au test de qualité ;
engendrer un modèle d'image si l'image a réussi le test de qualité ;
comparer le modèle d'image à une base de données de modèle d'image ; et
fournir des données à l'utilisateur si, pour le modèle d'image capturée, une correspondance est réalisée dans ladite base de données.
